# EUROPEAN PATENT APPLICATION

(11) **EP 3 961 427 A1**
(43) Date of publication of application: **02.03.2022**
(21) Application number: 20796048.5
(22) Date of filing: 27.03.2020
(51) Int. Cl.: G06F 16/538

(54) **DISPLAY CONTROL METHOD AND TERMINAL DEVICE**

(30) Priority: 25.04.2019 CN 201910340743
(71) Applicant: VIVO MOBILE COMMUNICATION CO., LTD., Dongguan, Guangdong 523860 (CN)
(72) Inventor: SU, Huajie, Dongguan, Guangdong 523860 (CN)
(74) Representative: Petraz, Gilberto Luigi
(86) International application number: PCT/CN2020/081805
(87) International publication number: WO 2020/215990

(57) **Abstract**

A display control method and a terminal device are provided. The method includes: obtaining a target screenshot with no operation record; obtaining image data and application data of the target screenshot and historical screenshot data associated with a data type to which the image data and the application data belong, where the application data is used to indicate an application for obtaining the target screenshot; and displaying prompt information when it is determined, based on the historical screenshot data, that the target screenshot meets a preset condition; where the prompt information is used to indicate that there is a screenshot with no operation record in the terminal device.

## Description

This application claims priority to Chinese Patent Application No. 201910340743.6, filed with the China National Intellectual Property Administration on April 25, 2019 and entitled "DISPLAY CONTROL METHOD AND TERMINAL DEVICE", which is incorporated herein by reference in its entirety.

### TECHNICAL FIELD

Embodiments of the present disclosure relate to the field of communications technologies, and in particular, to a display control method and a terminal device.

### BACKGROUND

A screenshot is a visual image obtained after a screenshot of interface content is taken by using a screenshot function of a terminal device to record the interface content displayed by the terminal device (for example, a mobile phone).

Currently, a user may use the screenshot function of the terminal device to trigger the terminal device to obtain multiple screenshots such as a screenshot of a chat interface, a screenshot of a video interface, a screenshot of a commodity interface, a screenshot of a payment interface, and a screenshot of a document interface, and store the screenshots in an album of the terminal device, so that the user can perform a sharing operation, a renaming operation, and the like on the screenshots.

However, if the user wants to use some screenshots with no operation record, or the user wants to delete some screenshots with no operation record, when there are a relatively large quantity of images in the album, the user may spend a relatively long time in finding these screenshots from the album. Consequently, a process of finding the screenshot is time-consuming.

### SUMMARY

Embodiments of the present disclosure provide a display control method and a terminal device, to resolve a problem that a process of finding a screenshot is relatively time-consuming because there are a large quantity of screenshots in a terminal device.

To resolve the foregoing technical problem, the embodiments of the present disclosure are implemented as follows:

According to a first aspect, an embodiment of the present disclosure further provides a display control method. The method may include: obtaining a target screenshot with no operation record; obtaining image data and application data of the target screenshot and historical screenshot data associated with a data type to which the image data and the application data belong, where the application data is used to indicate an application for obtaining the target screenshot; and displaying prompt information when it is determined, based on the historical screenshot data, that the target screenshot meets a preset condition; where the prompt information is used to indicate that there is a screenshot with no operation record in a terminal device.

According to a second aspect, an embodiment of the present disclosure provides a terminal device. The terminal device may include an obtaining module, a determining module, and a display module. The obtaining module is configured to: obtain a target screenshot with no operation record, and obtain image data and application data of the target screenshot and historical screenshot data associated with a data type to which the image data and the application data belong, where the application data is used to indicate an application for obtaining the target screenshot. The display module is configured to display prompt information in a case that the determining module determines, based on the historical screenshot data, that the target screenshot meets a preset condition. The prompt information is used to indicate that there is a screenshot with no operation record in the terminal device.

According to a third aspect, an embodiment of the present disclosure provides a terminal device, including a memory, a processor, and a computer program that is stored in the memory and executable on the processor, where when the computer program is executed by the processor, steps in the display control method provided in the first aspect are implemented.

According to a fourth aspect, an embodiment of this application provides a computer-readable storage medium, where the computer-readable storage medium stores a computer program, and when the computer program is executed by a processor, steps of the display control method provided in the first aspect are implemented.

In the embodiments of the present disclosure, a target screenshot with no operation record may be obtained; image data and application data of the target screenshot and historical screenshot data associated with a data type to which the image data and the application data belong are obtained, where the application data is used to indicate an application for obtaining the target screenshot; and prompt information is displayed when it is determined, based on the historical screenshot data, that the target screenshot meets a preset condition, where the prompt information is used to indicate that there is a screenshot with no operation record in a terminal device. In this solution, when the target screenshot with no operation record is obtained, the terminal device may determine, based on the historical screenshot data associated with the image data and the application data of the target screenshot, whether the target screenshot meets the preset condition, and display the prompt information when the target screenshot meets the preset condition. Therefore, a user can directly view the target screenshot based on the prompt information, and does not need to search multiple images in an album of the terminal device for the target screenshot, thereby simplifying a process of finding the screenshot by the user, and saving time of the user.

### BRIEF DESCRIPTION OF DRAWINGS

FIG. 1 is a schematic architectural diagram of an Android operating system according to an embodiment of the present disclosure;
FIG. 2 is a schematic diagram of a display control method according to an embodiment of the present disclosure;
FIG. 3 is a first schematic diagram of an operation on prompt information according to an embodiment of the present disclosure;
FIG. 4 is a second schematic diagram of an operation on prompt information according to an embodiment of the present disclosure;
FIG. 5 is a third schematic diagram of an operation on prompt information according to an embodiment of the present disclosure;
FIG. 6 is a fourth schematic diagram of an operation on prompt information according to an embodiment of the present disclosure;
FIG. 7 is a first schematic diagram of displaying a screenshot by a terminal device according to an embodiment of the present disclosure;
FIG. 8 is a second schematic diagram of displaying a screenshot by a terminal device according to an embodiment of the present disclosure;
FIG. 9 is a third schematic diagram of displaying a screenshot by a terminal device according to an embodiment of the present disclosure;
FIG. 10 is a first schematic structural diagram of a terminal device according to an embodiment of the present disclosure;
FIG. 11 is a second schematic structural diagram of a terminal device according to an embodiment of the present disclosure;
FIG. 12 is a third schematic structural diagram of a terminal device according to an embodiment of the present disclosure;
FIG. 13 is a fourth schematic structural diagram of a terminal device according to an embodiment of the present disclosure; and
FIG. 14 is a schematic hardware diagram of a terminal device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some rather than all of the embodiments of the present disclosure. Based on the embodiments of the present disclosure, all other embodiments obtained by a person of ordinary skill in the art without creative efforts shall fall within the protection scope of the present disclosure.

In this specification, the term "and/or" is merely an association relationship that describes associated objects, and represents that there may be three relationships. For example, A and/or B may represent three cases: only A exists, both A and B exist, and only B exists. In this specification, the symbol "/" indicates that the associated objects are in an "or" relationship, for example, A/B indicates A or B.

Terms "first", "second", and the like in the specification and claims of the present disclosure are used to distinguish between different objects, and are not used to describe a specific sequence of the objects. For example, first information and second information are used to distinguish between different information, and are not used to describe a specific sequence of information.

In the embodiments of the present disclosure, words such as "exemplary" or "for example" are used to indicate an example, an instance, or descriptions. Any embodiment or design scheme described as "exemplary" or "an example" in the embodiments of the present disclosure should not be construed as being advantageous than other embodiments or design schemes. Specifically, the words such as "exemplary" or "for example" are used to present related concepts in a specific manner.

In the descriptions of the embodiments of this disclosure, unless otherwise stated, "multiple" means two or more, for example, multiple elements mean two or more elements.

Embodiments of the present disclosure provide a display control method and a terminal device. A target screenshot with no operation record may be obtained; image data and application data of the target screenshot and historical screenshot data associated with a data type to which the image data and the application data belong are obtained, where the application data is used to indicate an application for obtaining the target screenshot; and prompt information is displayed when it is determined, based on the historical screenshot data, that the target screenshot meets a preset condition, where the prompt information is used to indicate that there is a screenshot with no operation record in a terminal device. In this solution, when the target screenshot with no operation record is obtained, the terminal device may determine, based on the historical screenshot data associated with the image data and the application data of the target screenshot, whether the target screenshot meets the preset condition, and display the prompt information when the target screenshot meets the preset condition. Therefore, a user can directly view the target screenshot based on the prompt information, and does not need to search multiple images in an album of the terminal device for the target screenshot, thereby simplifying a process of finding the screenshot by the user, and saving time of the user.

The terminal device in the embodiments of the present disclosure may be a terminal device with an operating system. The operating system may be an Android (Android) operating system, may be an iOS operating system, or may be another possible operating system. This is not specifically limited in the embodiments of the present disclosure.

The Android operating system is used as an example to describe a software environment to which a display control method provided in an embodiment of the present disclosure is applied.

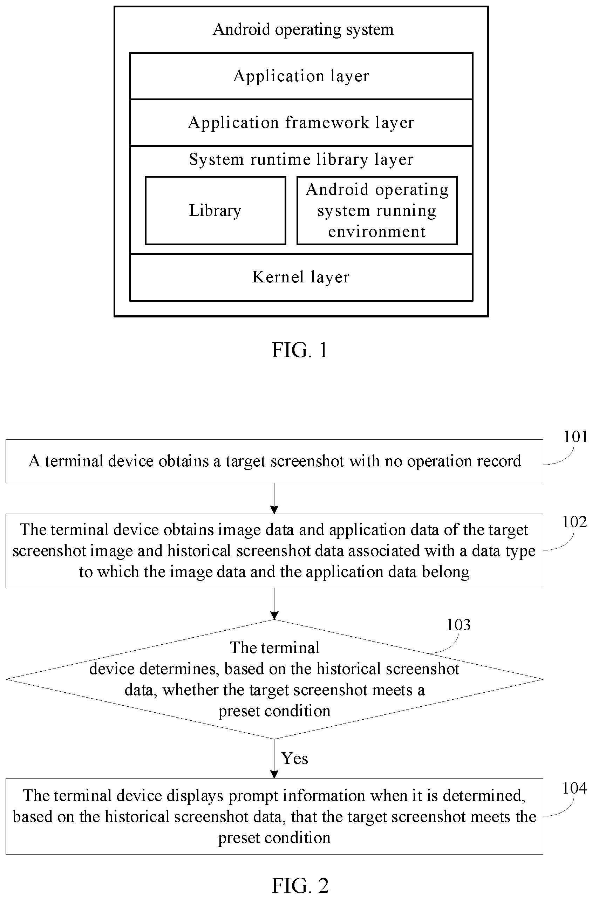

FIG. 1 is a schematic architectural diagram of an Android operating system according to an embodiment of the present disclosure. In FIG. 1, an architecture of the Android operating system includes four layers: an application layer, an application framework layer, a system runtime library layer, and a kernel layer (which may be specifically a Linux kernel layer).

The application layer includes various applications in the Android operating system (including a system application and a third-party application).

The application framework layer is a framework of an application. A developer can develop some applications based on the application framework layer while complying with a development principle of the framework of the application.

The system runtime library layer includes a library (also referred to as a system library) and an operating system operating environment. The library mainly provides the operating system with various required resources. The operating system running environment is used to provide a software environment for the operating system.

The kernel layer is an operating system layer of the operating system, and is a bottom layer in operating system software layers. The kernel layer provides a core system service and a hardware-related driver for the operating system based on a Linux kernel.

In the embodiments of the present disclosure, the developer may develop, based on the foregoing system architecture of the operating system shown in FIG. 1, a software program for implementing the display control method provided in the embodiments of the present disclosure, so that the display control method may run based on the operating system shown in FIG. 1. In other words, a processor or the terminal device may run the software program in the operating system to implement the display control method provided in the embodiments of the present disclosure.

The terminal device in the embodiments of the present disclosure may be a mobile terminal device, or may be a non-mobile terminal device. For example, the mobile terminal device may be a mobile phone, a tablet computer, a notebook computer, a palmtop computer, an in-vehicle terminal device, a wearable device, an ultra-mobile personal computer (ultra-mobile personal computer, UMPC), a netbook, or a personal digital assistant (personal digital assistant, PDA), and the non-mobile terminal device may be a personal computer (personal computer, PC), a television (television, TV), a counter, or a self-service computer. This is not specifically limited in the embodiments of the present disclosure.

The display control method provided in the embodiments of the present disclosure may be performed by the foregoing terminal device or a functional module and/or a functional entity that can implement the display control method in the terminal device. This may be specifically determined according to an actual use requirement, and is not limited in the embodiments of the present disclosure. The terminal device is used as an example below to describe the display control method provided in the embodiments of the present disclosure.

As shown in FIG. 2, an embodiment of the present disclosure provides a display control method. The method may be applied to a terminal device. The method may include the following step 101 to step 104.

Step 101: The terminal device obtains a target screenshot with no operation record.

Optionally, in this embodiment of the present disclosure, the target screenshot may be a screenshot obtained after the terminal device performs a screenshot operation on an interface of a target application by using a screenshot function.

Optionally, in this embodiment of the present disclosure, the target application may be any application in the terminal device. For example, the target application may be a shopping-type application, a social-type application, a map-type application, a setting-type application, a weather-type application, or a camera-type application.

Optionally, in this embodiment of the present disclosure, the target screenshot may be a static screenshot or a dynamic screenshot. The static screenshot may be a bitmap file. For example, the static screenshot may be a bitmap file in a BMP format, a bitmap file in a PNG format, or a bitmap file in a JPEG format. The dynamic screenshot may be a segment of a video file.

Optionally, in this embodiment of the present disclosure, the target screenshot may be any screenshot, multiple screenshots, or all screenshots in all screenshots with no operation record that are stored in the terminal device.

Optionally, in this embodiment of the present disclosure, the terminal device may obtain the target screenshot with no operation record in any one of the following scenarios.

Scenario 1: When the terminal device switches to an interface of the target application from a current interface, the terminal device obtains the target screenshot with no operation record. The target screenshot may be a screenshot obtained by the target application.

Scenario 2: When the terminal device displays an interface of the target application, and system time of the terminal device is preset time, the terminal device obtains the target screenshot with no operation record. The target screenshot may be a screenshot obtained by the target application.

Scenario 3: When a screen of the terminal device switches from a lock screen state to an unlock state, and the terminal device displays a desktop interface, the terminal device obtains the target screenshot with no operation record. The target screenshot may be a screenshot obtained by any application installed on the terminal device.

Scenario 4: When the terminal device displays a desktop interface, and system time of the terminal device is preset time, the terminal device obtains the target screenshot with no operation record. The target screenshot may be a screenshot obtained by any application installed on the terminal device.

It should be noted that in this embodiment of the present disclosure, after the terminal device obtains the screenshot, a user may perform multiple operations on the screenshot. For example, the operations may include: a browsing operation on the screenshot, a content editing operation on the screenshot, a renaming operation on the screenshot, an area moving operation on the screenshot, an uploading operation on the screenshot, a collection operation on the screenshot, and a sharing operation on the screenshot. If the user performs at least one of these operations on the screenshot, the terminal device may store an operation record for the screenshot in the terminal device, and determine that the screenshot is a screenshot with an operation record. However, if the user does not perform any operation on the screenshot, an operation record of the screenshot is not stored in the terminal device, so that the screenshot may be determined as a screenshot with no operation record.

Step 102: The terminal device obtains image data and application data of the target screenshot and historical screenshot data associated with a data type to which the image data and the application data belong.

The application data of the target screenshot may be used to indicate an application for obtaining the target screenshot. The image data of the target screenshot may be used to indicate image content of the target screenshot.

It should be noted that "associated" in this embodiment of this disclosure means that there is an association relationship between two objects. For example, if the application for obtaining the target screenshot is an application A, and an application for obtaining a first screenshot is also the application A, the target screenshot is associated with the first screenshot. For another example, if a content type of the target screenshot is a chat interface with a friend B, and a content type of a first screenshot is also the chat interface with the friend B, the target screenshot is associated with the first screenshot. For another example, if a file type to which content of the target screenshot belongs is word, and a file type to which content of a first screenshot belongs is also word, the target screenshot is associated with the first screenshot.

Optionally, in this embodiment of the present disclosure, the image data of the target screenshot may include text content of the target screenshot, image content of the target screenshot, and the like. The text content of the target screenshot may be a web address, a chat message, an identity card number, a mobile phone number, or the like. The image content of the target screenshot may be an expression image, a commodity image, a payment code image, or the like.

Optionally, in this embodiment of the present disclosure, the data type to which the image data and the application data of the target screenshot belong may include a type of the application for obtaining the target screenshot, a content type of the target screenshot, and a file type to which the content of the target screenshot belongs.

Optionally, the type of the application may be specifically a name of the application, a category of the application, or the like.

Optionally, the content type may be specifically a text content type, an image content type, or the like.

Optionally, the file type may be specifically: word, pdf, excel, PPT, or the like.

Optionally, after the terminal device obtains the target screenshot with no operation record, the terminal device may first obtain the image data and the application data of the target screenshot, and then obtain, based on the image data and the application data of the target screenshot, the historical screenshot data associated with the data type to which the image data and the application data belong.

For example, if the terminal device determines, based on the image data and the application data of the target screenshot, that the target application for obtaining the target screenshot is an application A, the terminal device may obtain historical screenshot data associated with the application A. The historical screenshot data may be data of a historical screenshot that is obtained by the application A and has an operation record.

For example, if the terminal device determines, based on the image data and the application data of the target screenshot, that a content type of the target screenshot is a chat interface with a friend B, the terminal device may obtain historical screenshot data associated with the chat interface with the friend B. The historical screenshot data may be data of a historical screenshot whose content type is the chat interface with the friend B and that has an operation record.

For example, if the terminal device determines, based on the image data and the application data of the target screenshot, that a content type to which content of the target screenshot belongs is word, the terminal device may obtain historical screenshot data associated with word. The historical screenshot data may be data of a historical screenshot for which a file type to which the content of the target screenshot belongs is word and that has an operation record.

Optionally, in this embodiment of the present disclosure, the historical screenshot data may include at least one image control operation on a historical screenshot of the data type to which the image data and the application data of the target screenshot belong.

For example, the at least one image control operation may include: a browsing operation on the screenshot, a content editing operation on the screenshot, a renaming operation on the screenshot, an area moving operation on the screenshot, an uploading operation on the screenshot, a collection operation on the screenshot, and a sharing operation on the screenshot.

Step 103: The terminal device determines, based on the historical screenshot data, whether the target screenshot meets a preset condition.

Optionally, in this embodiment of the present disclosure, the preset condition may be at least one of the following: a quantity of first screenshots is greater than or equal to a preset quantity, and a weight value corresponding to the first screenshot is greater than or equal to a preset weight value.

The first screenshot is any one of the following: a screenshot that is obtained from the same application as the target screenshot and that has an operation record, a screenshot that includes same content as the target screenshot and that has an operation record, and a screenshot whose file type is the same as the file type to which the content of the target screenshot belongs and that has an operation record.

Specifically, step 103 may be implemented in either of the following two possible implementations.

A first possible implementation is as follows:
Step 103A1: The terminal device obtains a quantity of first screenshots based on the historical screenshot data.
Step 103A2: The terminal device determines whether the quantity of first screenshots is greater than or equal to a preset quantity.

It should be noted that a value of the preset quantity is not specifically limited in this embodiment of the present disclosure. For example, the preset quantity may be 5, 10, or 20, and may be specifically determined based on an actual use requirement.

In this embodiment of the present disclosure, in a case that the quantity of first screenshots is greater than or equal to the preset quantity, the terminal device may determine that the target screenshot meets the preset condition, and continue to perform the following step 104. In a case that the quantity of first screenshots is less than the preset quantity, the terminal device may determine that the target screenshot does not meet the preset condition, and does not need to perform the following step 104.

In an example for description, the first screenshot is a screenshot that is obtained from a same application as the target screenshot and that has an operation record, and the preset quantity is 20. If the terminal device determines that the target screenshot is a screenshot obtained from the application A, the terminal device may obtain the historical screenshot data, and obtain the first screenshot obtained from the application A based on the historical screenshot data, and determine that the quantity of first screenshots is 22. Then, the terminal device may determine that the quantity of first screenshots is greater than the preset quantity, that is, determine that the target screenshot meets the preset condition.

It may be understood that, in the first possible implementation, whether the target screenshot meets the preset condition may be determined by determining whether the quantity of first screenshots is greater than or equal to the preset quantity, so that the terminal device may determine whether to remind the user that there is a screenshot with no operation record.

A second possible implementation is as follows:
Step 103B1: The terminal device obtains a weight value corresponding to the first screenshot based on the historical screenshot data.

Optionally, step 103B1 may specifically include: obtaining a control operation type of each screenshot in the first screenshot; determining, based on the control operation type of each screenshot, a weight value corresponding to each screenshot; and calculating a sum of the weight values corresponding to the screenshots to obtain the weight value corresponding to the first screenshot. One control operation type corresponds to one weight value. It may be understood that, the weight value corresponding to the first screenshot can be obtained by calculating the sum of the weight values corresponding to the screenshots, so that the terminal device determines, based on the weight value corresponding to the first screenshot, whether the target screenshot meets the preset condition.

For example, Table 1 is a table of a correspondence between a control operation type and a weight value according to an embodiment of this disclosure.

**Table 1**

| Control operation type | Weight value |
|---|---|
| Browsing operation | 1 |
| Content editing operation | 2 |
| Renaming operation | 2 |
| Area moving operation | 2 |
| Uploading operation | 3 |
| Collection operation | 2 |
| Sharing operation | 3 |
| No operation | 0 |

It is assumed that the first screenshot includes a screenshot 1, a screenshot 2, a screenshot 3, a screenshot 4, a screenshot 5, and a screenshot 6. If the terminal device knows that a control operation type for the screenshot 1 is a browsing operation, a control operation type for the screenshot 2 is a content editing operation, a control operation type for the screenshot 3 is a renaming operation, a control operation type for the screenshot 4 is an area moving operation, a control operation type for the screenshot 5 is an uploading operation, and a control operation type for the screenshot 6 is a collection operation, the terminal device may determine, based on a weight value corresponding to each control operation type in Table 1, that a weight value corresponding to the screenshot 1 is 1, a weight value corresponding to the screenshot 2 is 2, a weight value corresponding to the screenshot 3 is 2, a weight value corresponding to the screenshot 4 is 2, a weight value corresponding to the screenshot 5 is 3, and a weight value corresponding to the screenshot 6 is 2. Further, the terminal device may calculate a sum of the weight values of the six screenshots, so that the weight value corresponding to the first screenshot may be obtained as 12.

Step 103B2: The terminal device determines whether the weight value corresponding to the first screenshot is greater than or equal to a preset weight value.

It should be noted that a value of the preset weight value is not specifically limited in this embodiment of the present disclosure. For example, the preset weight value may be 10, 50, or 100, and may be specifically determined based on an actual use requirement.

In this embodiment of the present disclosure, in a case that the weight value corresponding to the first screenshot is greater than or equal to the preset weight value, the terminal device may determine that the target screenshot meets the preset condition, and continue to perform the following step 104. When the weight value corresponding to the first screenshot is less than the preset weight value, the terminal device may determine that the target screenshot does not meet the preset condition, and does not need to perform the following step 104.

In an example for description, the first screenshot is a screenshot whose file type is same as the file type to which the content of the target screenshot belongs and that has an operation record, and the preset weight value is 50. If the terminal device determines that the file type to which the content of the target screenshot belongs is word, the terminal device may obtain the historical screenshot data, obtain, based on the historical screenshot data, a first screenshot whose file type is word, and determine that the weight value corresponding to the first screenshot is 60, the terminal device may determine that the weight value corresponding to the first screenshot is greater than the preset weight value, that is, determine that the target screenshot meets the preset condition.

It may be understood that, in the second possible implementation, whether the target screenshot meets the preset condition may be determined by determining whether the weight value corresponding to the first screenshot is greater than or equal to the preset weight value, so that the terminal device may determine whether to remind the user that there is a screenshot with no operation record.

Step 104: The terminal device displays prompt information when it is determined, based on the historical screenshot data, that the target screenshot meets the preset condition.

The prompt information may be used to indicate that there is a screenshot with no operation record in the terminal device.

Optionally, in this embodiment of the present disclosure, the terminal device may display the prompt information in a first interface.

In an optional implementation, when the first interface is an interface of the target application, the prompt information may be a target identifier, and the target identifier may be used to indicate that there is an image on which no operation is performed in screenshots obtained from the target application. In another optional implementation, when the first interface is a desktop interface of the terminal device, the prompt information may be at least one prompt item, where each prompt item may be used to indicate that there is an image on which no operation is performed in screenshots obtained from an application, and different prompt items may be used to indicate different applications.

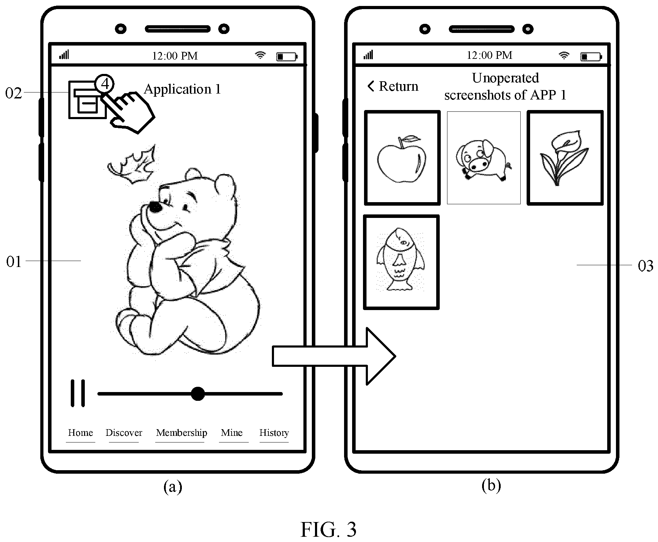

Specifically, the foregoing step 104 may be implemented by using the following (1) or (2).
(1) In a case that the interface of the terminal device is the interface of the target application, the terminal device displays one target identifier.
   For example, FIG. 3 is a schematic diagram of an operation on prompt information according to an embodiment of the present disclosure. As shown in (a) in FIG. 3, when the first interface is an interface 01 of the target application, the terminal device may display a target identifier 02 in a top area of the interface 01, and the target identifier 02 may be used to indicate that there are four image on which no operation is performed in screenshots obtained by the terminal device from the target application. Further, if the user taps the target identifier 02 shown in (a) in FIG. 3, the terminal device may display, in response to a tapping operation of the user, an interface 03 shown in (b) in FIG. 3, and the interface 03 may include the four image on which no operation is performed in the screenshots obtained from the target application.
(2) In a case that the interface of the terminal device is the desktop interface, the terminal device displays at least one prompt item.
   Specifically, the terminal device may display at least one prompt item when system time is preset time.

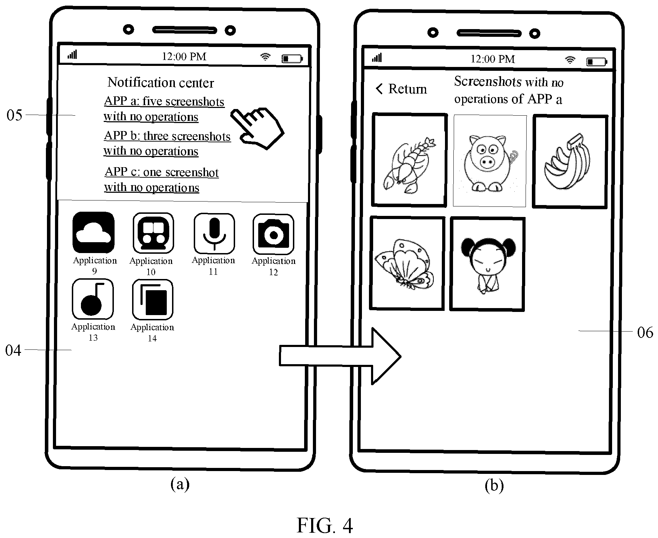

For example, FIG. 4 is a schematic diagram of another operation on prompt information according to an embodiment of the present disclosure. As shown in (a) in FIG. 4, when the first interface is a desktop interface 04 of the terminal device, the terminal device may display prompt information 05 in a notification bar of the interface 04, and the prompt information 05 may include three prompt items. A prompt item "APP a: five unoperated screenshots" may be used to indicate that there are five image on which no operation is performed in screenshots obtained from an application a, a prompt item "APP b: three unoperated screenshots" may be used to indicate that there are three image on which no operation is performed in screenshots obtained from an application b, and a prompt item "APP c: one unoperated screenshot" may be used to indicate that there is one image on which no operation is performed in screenshots obtained from an application c. Further, if the user taps the prompt item "APP a: five unoperated screenshots" shown in (a) in FIG. 4, the terminal device may display, in response to a tapping operation of the user, an interface 06 shown in (b) in FIG. 4, and the interface 06 may include five image on which no operation is performed in the screenshots obtained from the application a.

It may be understood that, when the user uses the target application, the user may wish to perform an operation on a screenshot obtained from the target application. Therefore, the target identifier is displayed on the interface of the target application, so that a probability that the user performs an operation on the application indicated by the target identifier can be increased. In another aspect, when the user uses the desktop interface of the terminal device, the user may temporarily not explicitly operate a specific application. Therefore, at least one prompt item is displayed on the desktop interface, so that it is convenient for the user to select a screenshot that is corresponding to an application and that has no operation record.

Optionally, in this embodiment of the present disclosure, when the historical screenshot data includes at least one image control operation on the historical screenshot of the data type to which the image data and the application data of the target screenshot belong, the prompt information may be specifically used to prompt the user to perform at least one image control operation on the target screenshot.

For example, if at least one image control operation is a browsing operation on the historical screenshot, the prompt information may be specifically used to prompt the user to perform the browsing operation on the target screenshot.

For example, if at least one image control operation is a content editing operation on the historical screenshot, the prompt information may be specifically used to prompt the user to perform the content editing operation on the target screenshot.

For example, if at least one image control operation is a renaming operation on the historical screenshot, the prompt information may be specifically used to prompt the user to perform the renaming operation on the target screenshot.

For example, if at least one image control operation is an area moving operation on the historical screenshot, the prompt information may be specifically used to prompt the user to perform the area moving operation on the target screenshot.

For example, if at least one image control operation is an uploading operation on the historical screenshot, the prompt information may be specifically used to prompt the user to perform the uploading operation on the target screenshot.

For example, if at least one image control operation is a collection operation on the historical screenshot, the prompt information may be specifically used to prompt the user to perform the collection operation on the target screenshot.

For example, if at least one image control operation is a sharing operation on the historical screenshot, the prompt information may be specifically used to prompt the user to perform the sharing operation on the target screenshot.

It may be understood that, by displaying information, the user may be prompted to perform a same historical control operation on the target screenshot based on the historical control operation on the screenshot, thereby improving operation convenience of the user.

This embodiment of the present disclosure provides a display control method. A target screenshot with no operation record may be obtained; image data and application data of the target screenshot and historical screenshot data associated with a data type to which the image data and the application data belong are obtained, where the application data is used to indicate an application for obtaining the target screenshot; and prompt information is displayed when it is determined, based on the historical screenshot data, that the target screenshot meets a preset condition, where the prompt information is used to indicate that there is a screenshot with no operation record in a terminal device. In this solution, when the target screenshot with no operation record is obtained, the terminal device may determine, based on the historical screenshot data associated with the image data and the application data of the target screenshot, whether the target screenshot meets the preset condition, and display the prompt information when the target screenshot meets the preset condition. Therefore, a user can directly view the target screenshot based on the prompt information, and does not need to search multiple images in an album of the terminal device for the target screenshot, thereby simplifying a process of finding the screenshot by the user, and saving time of the user.

Optionally, in this embodiment of the present disclosure, before step 101, the display control method provided in this embodiment of the present disclosure may further include the following step 105 to step 107.

Step 105: The terminal device obtains i-th screenshot.

### i is a positive integer.

Step 106: The terminal device detects, based on a preset period, whether the i-th screenshot has an operation record.

Step 107: If the i-th screenshot has no operation record in each detection, the terminal device determines that the i-th screenshot is the target screenshot with no operation record.

It should be noted that, that the terminal device determines whether the i-th screenshot has an operation record is used as an example for description in this embodiment of the present disclosure, and constitutes no limitation to this embodiment of the present disclosure. It may be understood that, whether another screenshot has an operation record may also be determined based on the foregoing method, and details are not described herein again.

Optionally, in this embodiment of the present disclosure, the preset period may be 0.5 seconds, 1 second, 5 seconds, or the like. This may be specifically determined according to an actual use requirement, and is not limited in this embodiment of the present disclosure.

Optionally, in this embodiment of the present disclosure, in a possible implementation, the i-th screenshot may be any image in screenshots obtained by the terminal device by using a screenshot operation. In another possible implementation, the i-th screenshot may be any image in screenshots with no operation record that are determined by the terminal device after a previous detection performed by the terminal device based on the preset period.

In the display control method provided in this embodiment of the present disclosure, whether a screenshot has an operation record may be periodically detected based on the preset period, so that the terminal device can determine the target screenshot with no operation record, and further, the terminal device can determine whether the target screenshot meets the preset condition.

Optionally, the display control method provided in this embodiment of the present disclosure may further include the following step 108.

Step 108: In a case that the number of times of displaying the prompt information reaches a preset number of times, the terminal device adjusts a value of a target time interval from a first value to a second value, and reduces a weight value corresponding to a control operation type of the target screenshot.

The target time interval may be a time interval of two consecutive times of displaying the prompt information by the terminal device. The second value may be greater than the first value.

It should be noted that the foregoing "consecutive" may be understood as that no other action of displaying the prompt information is performed between any two actions of displaying the prompt information. For example, if the prompt information is displayed for the (n+1)^{th} time after the prompt information is displayed for the n^{th} time, it may be considered that the terminal device displays the prompt information for two consecutive times.

In addition, a value of the preset number of times, the first value, and the second value are not specifically limited in this embodiment of the present disclosure, and may be specifically determined based on an actual use requirement.

For example, it is assumed that the number of times is 3, the first value is 1 hour, and the second value is 2 hours. When the number of times of displaying the target prompt information by the terminal device reaches three times, the terminal device may determine that the user may have no time or willing to view the screenshot with no operation record. Therefore, the terminal device may adjust a value of the target time interval from one hour to two hours, that is, change from displaying the prompt information every one hour to displaying the prompt information every two hours, and reduce the weight value corresponding to the control operation type of the target screenshot.

For example, Table 2 is a table of another correspondence between a control operation type and a weight value according to an embodiment of this disclosure.

**Table 2**

| Control operation type | Unadjusted weight value | Adjusted weight value |
|---|---|---|
| Browsing operation | 1 | 0.5 |
| Content editing operation | 2 | 1 |
| Renaming operation | 2 | 1 |
| Area moving operation | 2 | 1 |
| Uploading operation | 3 | 2 |
| Collection operation | 2 | 1 |
| Sharing operation | 3 | 2 |
| No operation | 0 | 0 |

As shown in Table 2, if the control operation type corresponding to the target screenshot is a browsing operation, the terminal device may reduce a weight value corresponding to the browsing operation from 1 to 0.5; if the control operation type corresponding to the target screenshot is a content editing operation, the terminal device may reduce a weight value corresponding to the content editing operation from 2 to 1; if the control operation type corresponding to the target screenshot is a renaming operation, the terminal device may reduce a weight value corresponding to the renaming operation from 2 to 1; if the control operation type corresponding to the target screenshot is an area moving operation, the terminal device may reduce a weight value corresponding to the area moving operation from 2 to 1; if the control operation type corresponding to the target screenshot is an uploading operation, the terminal device may reduce a weight value corresponding to the uploading operation from 3 to 2; if the control operation type corresponding to the target screenshot is a collection operation, the terminal device may reduce a weight value corresponding to the collection operation from 2 to 1; and if the control operation type corresponding to the target screenshot is a sharing operation, the terminal device may reduce a weight value corresponding to the sharing operation from 3 to 2.

In the display control method provided in this embodiment of the present disclosure, when the number of times that the terminal device displays the prompt information reaches the preset number of times, the user may have no willing or time to view the screenshot with no operation record. Therefore, in one aspect, by increasing the time interval for displaying the prompt information, the number of times of reminding the user can be reduced, so that the user can be prevented from be disturbed by frequent reminding. In another aspect, by reducing the weight value corresponding to the control operation type of the screenshot, a probability of prompting the screenshot that belongs to the control operation type can be reduced, thereby improving a sense of experience of the user.

Optionally, in this embodiment of the present disclosure, after step 104, the display control method provided in this embodiment of the present disclosure may further include the following step 109.

Step 109: If an input of the user for the prompt information is received, the terminal device does not display the prompt information when the terminal device displays a target interface next time.

The target interface may be the desktop interface or the interface of the target application.

It should be noted that the input of the user for the prompt information may include any input for the prompt information, for example, a sliding input, a tapping input, or a pressing input for the prompt information.

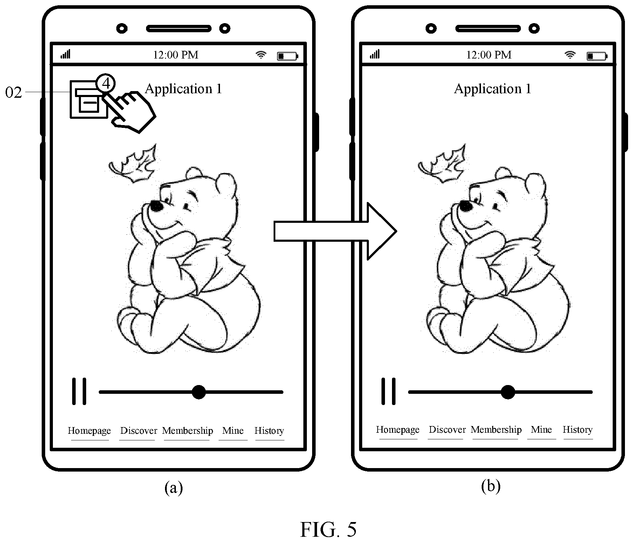

For example, FIG. 5 is a schematic diagram of another operation on prompt information according to an embodiment of the present disclosure. When the terminal device determines, based on the historical screenshot data, that the target screenshot meets the preset condition, prompt information 02 shown in (a) in FIG. 5 may be displayed on the target interface of the target application. If the terminal device receives an input of the user for the prompt information 02, when the terminal device runs the target application again and displays the target interface, as shown in (b) in FIG. 5, the terminal device may not display the prompt information.

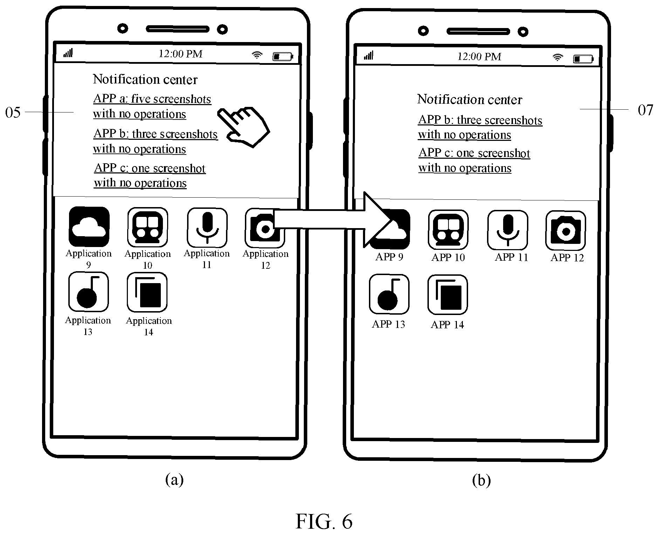

For example, FIG. 6 is a schematic diagram of another operation on prompt information according to an embodiment of the present disclosure. When the terminal device determines, based on the historical screenshot data, that the target screenshot meets the preset condition, prompt information 05 shown in (a) in FIG. 6 may be displayed on the desktop interface of the terminal device, and the prompt information 05 includes three prompt items. If the terminal device receives an input of the user for one of the three prompt items, when the terminal device displays the desktop interface again, as shown in (b) in FIG. 6, the terminal device may display prompt information 07, and the prompt information 07 may include two other prompt items except the prompt item in the three prompt items.

In the display control method provided in this embodiment of the present disclosure, when the input of the user for the prompt information is received, it may be determined that the user already knows that there is the screenshot with no operation record. In this way, when the terminal device displays the desktop interface or the interface of the target application next time, the prompt information is not displayed, so that the user can be prevented from be disturbed by frequent reminding.

Optionally, in this embodiment of the present disclosure, before step 101, the display control method provided in this embodiment of the present disclosure may further include the following step 110.

Step 110: After obtaining the target screenshot, the terminal device stores the image data and the application data of the target screenshot.

It should be noted that for specific descriptions of the target screenshot and the image data and the application data of the target screenshot, reference may be made to related descriptions in this embodiment. Details are not described herein again.

For example, when the user uses the terminal device to chat with a friend of the user, the user may use a screenshot function of the terminal device to trigger the terminal device to obtain a screenshot of a chat interface, that is, the target screenshot. In this way, after obtaining the target screenshot, the terminal device may obtain the image data of the target screenshot and the application data of the target screenshot, and store the image data of the target screenshot and the application data of the target screenshot in the terminal device.

In the display control method provided in this embodiment of the present disclosure, the image data and the application data of the target screenshot are stored in the terminal device, so that the terminal device obtains, based on the image data and the application data, the historical screenshot data associated with the data type to which the image data and the application data belong, and determines, based on the historical screenshot data, whether to display the prompt information. In this way, the user may determine, based on the prompt information, that there is the screenshot with no operation record in the terminal device.

Optionally, in this embodiment of the present disclosure, after obtaining each screenshot by using the screenshot function, the terminal device may obtain image data and application data of each screenshot. Therefore, the display control method provided in this embodiment of the present disclosure may further include: after displaying the prompt information, displaying the screenshot in three different viewing manners based on the image data and the application data of each screenshot.

The three viewing manners are specifically described in detail below by using the following (1) to (3).

### (1) For a first viewing manner

After step 104, the display control method provided in this embodiment of the present disclosure may include step 111 and step 112.

Step 111: The terminal device receives a first input of the user.

Optionally, in this embodiment of the present disclosure, the first input may be a touch input, a voice input, a gesture input, a gravity input, or the like. The touch input may be a touch and hold input, a sliding input, a tapping input, or the like.

Step 112: The terminal device displays at least one screenshot in response to the first input, where each screenshot in the at least one screenshot includes one first identifier and one second identifier.

One first identifier may be used to indicate one first-type application. One second identifier may be used to indicate one second-type application. The first-type application may be an application for obtaining one screenshot. The second-type application may be an application associated with an operation on one screenshot.

It should be noted that in this embodiment of the present disclosure, the foregoing "associated" means that there is an association relationship between an operation on a screenshot and the second-type application. For example, if a screenshot is uploaded to a server by using the application A, an uploading operation on the screenshot is associated with the application A. For another example, if a renaming operation is performed on a screenshot by using the application B, the renaming operation on the screenshot is associated with the application B.

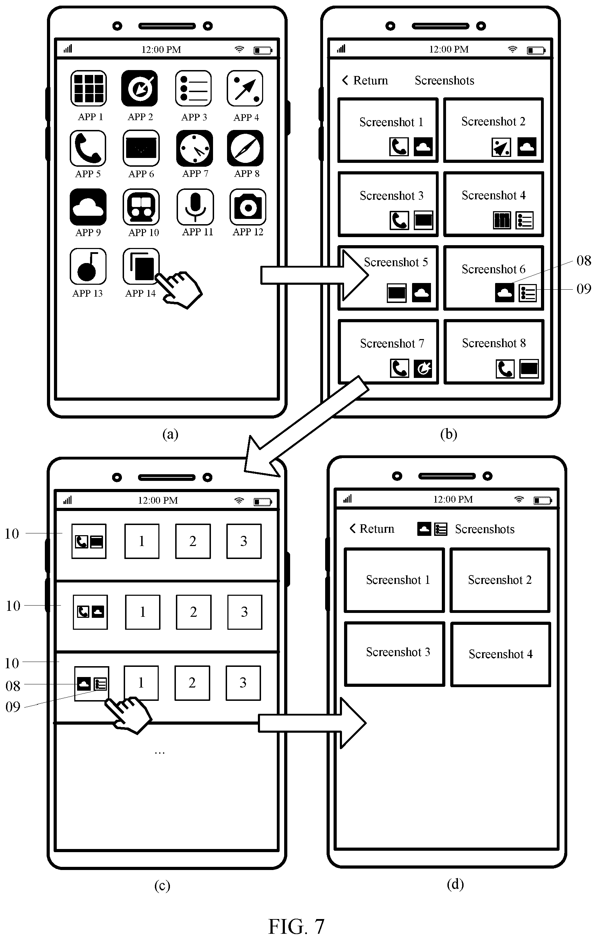

For example, when the terminal device displays icons of multiple applications shown in (a) in FIG. 7, if the terminal device receives a first input of the user for an icon "APP 14", the terminal device may display, in response to the first input, multiple screenshots shown in (b) in FIG. 7. Each screenshot may include one first identifier 08 and one second identifier 09, where the first identifier 08 may be used to indicate an application for obtaining a screenshot, and the second identifier 09 may be used to indicate an application associated with an operation on a screenshot.

Optionally, in this embodiment of the present disclosure, the terminal device may sort at least one screenshot based on obtaining time of the screenshot and a weight value of the screenshot, and display the at least one screenshot based on a sorting result. For example, a screenshot most recently used by the user or a screenshot most recently obtained by the user is displayed in a top area of the screen.

Optionally, in this embodiment of the present disclosure, step 112 may specifically include: The terminal device separately displays, in response to the first input, one first identifier, one second identifier, and at least one first screenshot in each sub-area of N sub-areas of a display area of a display screen. The at least one first screenshot is an image obtained from an application indicated by the first identifier and operated in an application indicated by the second identifier, one sub-area corresponds to at least one first screenshot associated with one first identifier and one second identifier, and N is a positive integer.

For example, the terminal device may classify and display the multiple screenshots shown in (b) in FIG. 7. As shown in (c) in FIG. 7, one first identifier 08, one second identifier 09, and at least one first screenshot are separately displayed in each sub-area 10 of multiple sub-areas of a display area of a display screen of the terminal device. Further, if the user operates a sub-area shown in (c) in FIG. 7, as shown in (d) in FIG. 7, the terminal device may display all screenshots associated with a first identifier and a second identifier in the sub-area.

It may be understood that, when the terminal device displays the screenshot, each screenshot includes one first identifier and one second identifier. Therefore, the user may identify different screenshots based on the two identifiers. Further, the terminal device may display, in each sub-area based on the first identifier and the second identifier, at least one application associated with the first identifier and the second identifier in each sub-area, so that the user can quickly manage and search for the screenshot, thereby saving time of the user.

### (2) For a second viewing manner

After step 104, the display control method provided in this embodiment of the present disclosure may include step 113 and step 114.

Step 113: The terminal device receives a second input of the user.

Optionally, in this embodiment of the present disclosure, the second input may be a touch input, a voice input, a gesture input, a gravity input, or the like. The touch input may be a touch and hold input, a sliding input, a tapping input, or the like.

Step 114: In response to the second input, the terminal device separately displays, in each sub-area of M sub-areas of a display area of a display screen, one first identifier and at least one screenshot associated with the first identifier.

One first identifier may be used to indicate one first-type application. The first-type application may be an application for obtaining at least one screenshot. M is a positive integer.

Optionally, after step 114, the display control method provided in this embodiment of the present disclosure may further include: The terminal device receives an input of the user for one first identifier, and displays, in response to the input for the first identifier, all screenshots associated with the first identifier.

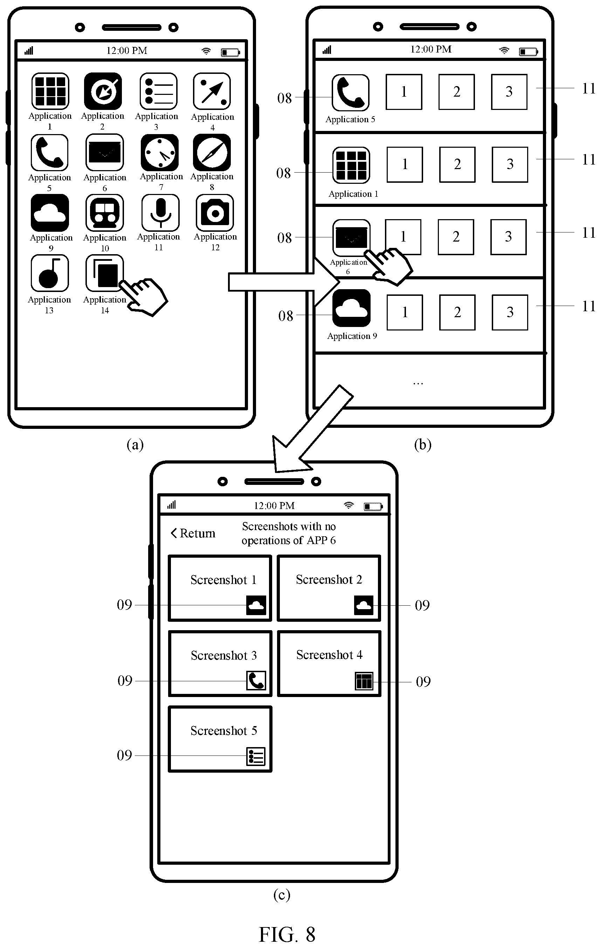

For example, when the terminal device displays icons of multiple applications shown in (a) in FIG. 8, if the terminal device receives a first input of the user for an icon "APP 14", in response to the first input, the terminal device may separately display, in each sub-area 11 of multiple sub-areas of the display area of the terminal device, one first identifier 08 and at least one screenshot associated with the first identifier 08, where the first identifier 08 in one sub-area 11 may be used to indicate an application for obtaining at least one screenshot in the sub-area 11. Further, if the user operates a sub-area 11 shown in (b) in FIG. 8, as shown in (c) in FIG. 8, the terminal device may display all screenshots associated with a first identifier in a sub-area 11, where each screenshot may include one second identifier 09.

It may be understood that, the terminal device may display, in each sub-area of the display area based on the first identifier, at least one application associated with a first identifier in each sub-area, so that the user can quickly manage and search for the screenshot, thereby saving time of the user. Further, because the user can select one sub-area from multiple sub-areas, the user can view all screenshots in the sub-area.

### (3) For a third viewing manner

After step 104, the display control method provided in this embodiment of the present disclosure may further include step 115 and step 116.

Step 115: The terminal device receives a third input of the user.

Optionally, in this embodiment of the present disclosure, the third input may be a touch input, a voice input, a gesture input, a gravity input, or the like. The touch input may be a touch and hold input, a sliding input, a tapping input, or the like.

Step 116: In response to the third input, the terminal device separately displays, in each sub-area of T sub-areas of a display area of a display screen, one second identifier and at least one screenshot associated with the second identifier.

One second identifier may be used to indicate one second-type application. The second-type application may be an application associated with an operation on at least one screenshot. T is a positive integer.

It should be noted that in this embodiment of the present disclosure, the foregoing "associated" means that there is an association relationship between an operation on a screenshot and the second-type application. For example, if a screenshot is uploaded to a server by using the application A, an uploading operation on the screenshot is associated with the application A. For another example, if a renaming operation is performed on a screenshot by using the application B, the renaming operation on the screenshot is associated with the application B.

Optionally, after step 114, the display control method provided in this embodiment of the present disclosure may further include: The terminal device receives an input of the user for one second identifier, and displays, in response to the input for the second identifier, all screenshots associated with the second identifier.

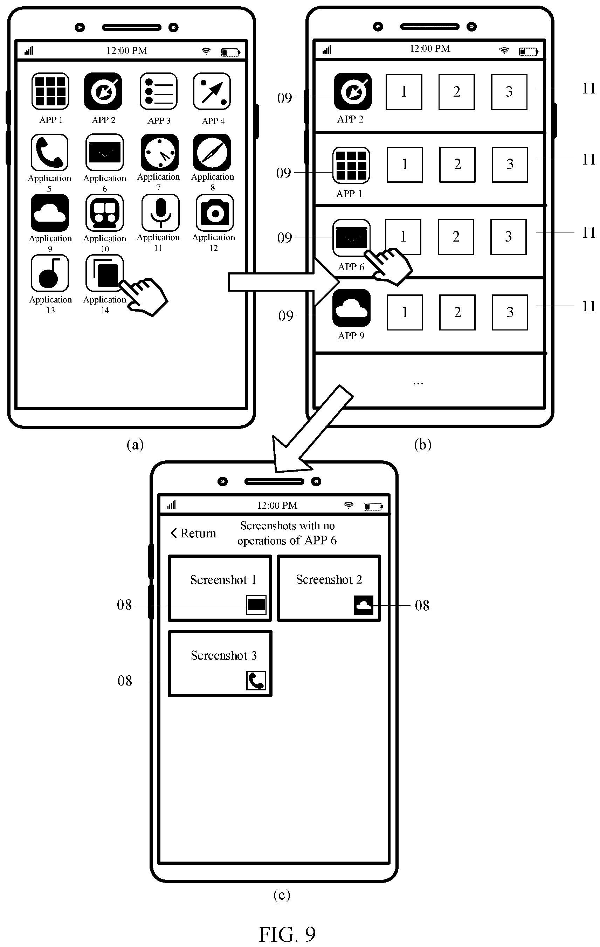

For example, when the terminal device displays icons of multiple applications shown in (a) in FIG. 9, if the terminal device receives a first input of the user for an icon "APP 14", in response to the first input, the terminal device may separately display, in each sub-area 11 of multiple sub-areas of the display area of the terminal device, one second identifier 09 and at least one screenshot associated with the second identifier 09, where the second identifier 09 in one sub-area 11 may be used to indicate an application for obtaining at least one screenshot in the sub-area 11. Further, if the user operates a sub-area 11 shown in (b) in FIG. 9, as shown in (c) in FIG. 9, the terminal device may display all screenshots associated with a second identifier in the sub-area 11, where each screenshot may include one first identifier 08.

It may be understood that, the terminal device may display, in each sub-area of the display area based on the second identifier, at least one application associated with a second identifier in each sub-area, so that the user can quickly manage and search for the screenshot, thereby saving time of the user. Further, because the user can select one sub-area from multiple sub-areas, the user can view all screenshots in the sub-area.

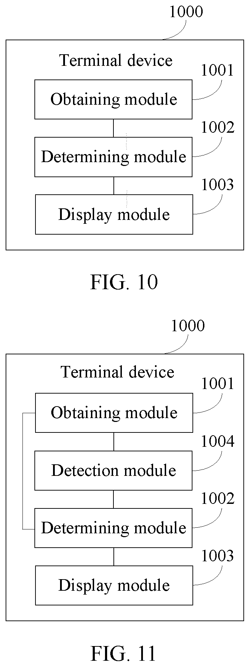

As shown in FIG. 10, an embodiment of the present disclosure provides a terminal device 1000. The terminal device may include an obtaining module 1001, a determining module 1002, and a display module 1003. The obtaining module 1001 is configured to: obtain a target screenshot with no operation record, and obtain image data and application data of the target screenshot and historical screenshot data associated with a data type to which the image data and the application data belong, where the application data may be used to indicate an application for obtaining the target screenshot. The display module 1003 is configured to display prompt information when the determining module 1002 determines, based on the historical screenshot data, that the target screenshot meets a preset condition. The prompt information may be used to indicate that there is a screenshot with no operation record in the terminal device.

Optionally, in this embodiment of the present disclosure, the historical screenshot data may include at least one image control operation on a historical screenshot of the data type to which the image data and the application data of the target screenshot belong. The prompt information may be specifically used to prompt the user to perform the at least one image control operation on the target screenshot. The data type includes: a type of the application for obtaining the target screenshot, a content type of the target screenshot, and a file type to which content of the target screenshot belongs.

Optionally, in this embodiment of the present disclosure, in a possible implementation, the obtaining module 1001 may be configured to obtain a quantity of first screenshots based on the historical screenshot data. The determining module 1002 may be configured to: in a case that the quantity of first screenshots obtained by the obtaining module 1001 is greater than or equal to a preset quantity, determine that the target screenshot meets the preset condition.

In another possible implementation, the obtaining module 1001 may be configured to obtain, based on the historical screenshot data, a weight value corresponding to the first screenshot. The determining module 1002 may be configured to: when the weight of the first screenshot that is obtained by the obtaining module 1001 is greater than or equal to a preset weight value determine that the target screenshot meets the preset condition. The first screenshot may be any one of the following: a screenshot that is obtained from a same application as the target screenshot and that has an operation record, a screenshot that includes same content as the target screenshot and that has an operation record, and a screenshot whose file type is the same as the file type to which the content of the target screenshot belongs and that has an operation record.

Optionally, in this embodiment of the present disclosure, the obtaining module 1001 may be specifically configured to: obtain a control operation type of each screenshot in the first screenshot; determine, based on the control operation type of each screenshot, a weight value corresponding to each screenshot; and calculate a sum of the weight values corresponding to the screenshots to obtain the weight value corresponding to the first screenshot. One control operation type corresponds to one weight value.

Optionally, with reference to FIG. 10, as shown in FIG. 11, the terminal device provided in this embodiment of the present disclosure may further include a detection module 1004. The obtaining module 1001 may be further configured to obtain the i-th screenshot. The detection module 1004 may be configured to detect, based on a preset period, whether the i-th screenshot obtained by the obtaining module 1001 has an operation record. The determining module 1002 may be further configured to: in a case that the detection module 1004 detects that the i-th screenshot has no operation record in each detection, determine that the i-th screenshot is a target screenshot with no operation record. i is a positive integer.

Optionally, in this embodiment of the present disclosure, the display module 1003 may be specifically configured to: display a target identifier in a case that an interface of the terminal device is an interface of a target application, where the target identifier is used to indicate that there is an image on which no operation is performed in screenshots obtained from the target application; or display at least one prompt item when an interface of the terminal device is a desktop interface, where each prompt item is used to indicate that there is an image on which no operation is performed in screenshots obtained from an application, and different prompt items indicate different applications.

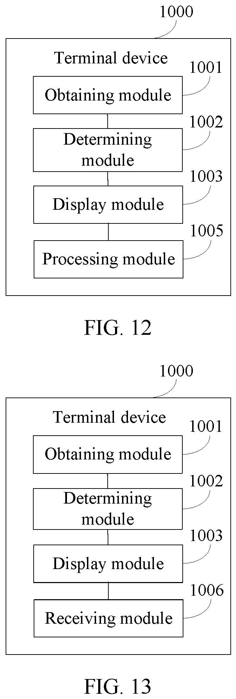

Optionally, with reference to FIG. 10, as shown in FIG. 12, the terminal device provided in this embodiment of the present disclosure may further include a processing module 1005. The processing module 1005 may be configured to: in a case that the number of times that the display module 1003 displays the prompt information reaches a preset number of times, adjust a value of a target time interval from a first value to a second value, and reduce a weight value corresponding to a control operation type of the target screenshot. The target time interval may be a time interval between two consecutive times of displaying the prompt information, and the second value may be greater than the first value.

Optionally, with reference to FIG. 10, as shown in FIG. 13, the terminal device provided in this embodiment of the present disclosure may further include a receiving module 1006. The receiving module 1006 may be configured to receive a first input of a user. The display module 1003 may be further configured to display at least one screenshot in response to the first input received by the receiving module 1006, where each screenshot in the at least one screenshot includes one first identifier and one second identifier. The first identifier may be used to indicate one first-type application, the second identifier may be used to indicate one second-type application, the first-type application may be an application for obtaining a screenshot, and the second-type application may be an application associated with an operation on a screenshot.

Optionally, in this embodiment of the present disclosure, the display module 1003 may be specifically configured to separately display one first identifier, one second identifier, and at least one first screenshot in each sub-area of N sub-areas of a display area of a display screen. The at least one first screenshot may be an image obtained from an application indicated by one first identifier and operated in an application indicated by one second identifier. One sub-area corresponds to at least one first screenshot associated with one first identifier and one second identifier. N is a positive integer.

Optionally, in this embodiment of the present disclosure, the receiving module 1006 may be configured to receive a second input of the user. The display module 1003 may be configured to: in response to the second input received by the receiving module 1006, display, in each sub-area of M sub-areas of a display area of a display screen, one first identifier and at least one screenshot associated with the first identifier. One first identifier may be used to indicate one first-type application, the first-type application is an application for obtaining the at least one screenshot, and M is a positive integer.

Optionally, in this embodiment of the present disclosure, the receiving module 1006 may be further configured to receive an input of the user for one first identifier. The display module 1003 may be further configured to display, in response to an input for one first identifier that is received by the receiving module 1006, all screenshots associated with the first identifier.

Optionally, in this embodiment of the present disclosure, the receiving module 1006 may be configured to receive a third input of the user. The display module 1003 may be configured to: in response to the third input received by the receiving module 1006, display, in each sub-area of T sub-areas of a display area of a display screen, one second identifier and at least one screenshot associated with the second identifier. One second identifier may be used to indicate one second-type application, the second-type application may be an application associated with an operation on the at least one screenshot, and T is a positive integer.

Optionally, in this embodiment of the present disclosure, the receiving module 1006 may be further configured to receive an input of the user for one second identifier. The display module 1003 may be further configured to display, in response to the input for one second identifier that is received by the receiving module 1006, all screenshots associated with the second identifier.

The terminal device provided in this embodiment of the present disclosure can implement processes implemented by the terminal device in the foregoing method embodiments. To avoid repetition, details are not described herein again.

This embodiment of the present disclosure provides a terminal device. Because when the terminal device obtains the target screenshot with no operation record, the terminal device may determine, based on the historical screenshot data associated with the image data and the application data of the target screenshot, whether the target screenshot meets the preset condition, and display the prompt information when the target screenshot meets the preset condition. Therefore, the user can directly view the target screenshot based on the prompt information, and does not need to search multiple images in an album of the terminal device for the target screenshot. In this way, the terminal device provided in this embodiment of the present disclosure can simplify a process of finding the screenshot by the user, and save time of the user.

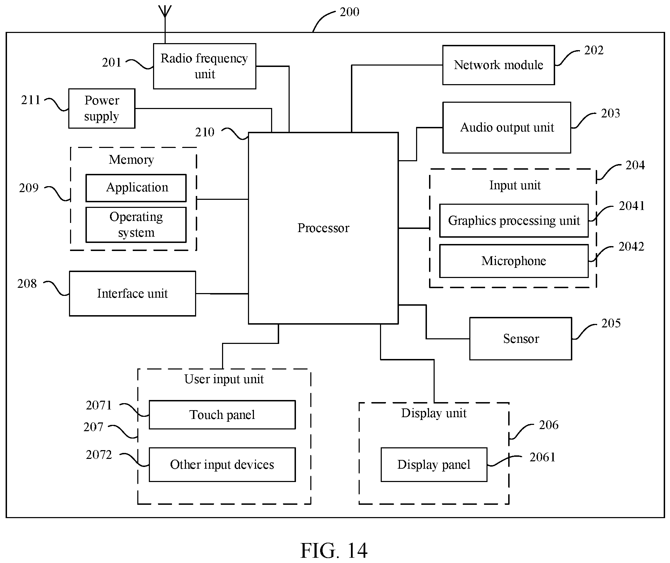

FIG. 14 is a schematic diagram of a hardware structure of a terminal device according to embodiments of the present disclosure. As shown in FIG. 14, a terminal device 200 includes but is not limited to components such as a radio frequency unit 201, a network module 202, an audio output unit 203, an input unit 204, a sensor 205, a display unit 206, a user input unit 207, an interface unit 208, a memory 209, a processor 210, and a power supply 211. A person skilled in the art may understand that a structure of the terminal device shown in FIG. 14 does not constitute a limitation on the terminal device, and the terminal device may include more or fewer components than those shown in the figure, or combine some components, or have different component arrangements. In this embodiment of the present disclosure, the terminal device includes but is not limited to a mobile phone, a tablet computer, a notebook computer, a palmtop computer, an in-vehicle terminal device, a wearable device, a pedometer, and the like.

The processor 210 is configured to: obtain a target screenshot with no operation record, and obtain image data and application data of the target screenshot and historical screenshot data associated with a data type to which the image data and the application data belong, where the application data may be used to indicate an application for obtaining the target screenshot. The display unit 206 is configured to display prompt information when the processor 210 determines, based on the historical screenshot data, that the target screenshot meets a preset condition. The prompt information may be used to indicate that there is a screenshot with no operation record in the terminal device.

This embodiment of the present disclosure provides a terminal device. Because when the terminal device obtains the target screenshot with no operation record, the terminal device may determine, based on the historical screenshot data associated with the image data and the application data of the target screenshot, whether the target screenshot meets the preset condition, and display the prompt information when the target screenshot meets the preset condition. Therefore, the user can directly view the target screenshot based on the prompt information, and does not need to search multiple images in an album of the terminal device for the target screenshot. In this way, the terminal device provided in this embodiment of the present disclosure can simplify a process of finding the screenshot by the user, and save time of the user.

It should be understood that, in this embodiment of the present disclosure, the radio frequency unit 201 may be configured to receive and send information or receive and send a signal in a call process. Specifically, after downlink data from a base station is received, the processor 210 processes the downlink data. In addition, uplink data is sent to the base station. Generally, the radio frequency unit 201 includes but is not limited to an antenna, at least one amplifier, a transceiver, a coupler, a low noise amplifier, a duplexer, and the like. In addition, the radio frequency unit 201 may further communicate with a network and another device by using a wireless communication system.

The terminal device provides wireless broadband Internet access for a user by using the network module 202, for example, helping the user send and receive an email, browse a web page, and access streaming media.

The audio output unit 203 may convert audio data received by the radio frequency unit 201 or the network module 202 or stored in the memory 209 into an audio signal and output as sound. In addition, the audio output unit 203 may further provide audio output (for example, call signal receiving sound or message receiving sound) related to a specific function performed by the terminal device 200. The audio output unit 203 includes a loudspeaker, a buzzer, a telephone receiver, and the like.

The input unit 204 is configured to receive an audio or video signal. The input unit 204 may include a graphics processing unit (Graphics Processing Unit, GPU) 2041 and a microphone 2042. The graphics processing unit 2041 processes image data of a static picture or a video obtained by an image capture apparatus (such as a camera) in a video capture mode or an image capture mode. A processed image frame may be displayed on the display unit 206. The image frame processed by the graphics processing unit 2041 may be stored in the memory 209 (or another storage medium) or sent by using the radio frequency unit 201 or the network module 202. The microphone 2042 may receive sound and can process such sound into audio data. The processed audio data may be output by being converted into a format that may be sent to a mobile communications base station by using the radio frequency unit 201 in a telephone call mode.

The terminal device 200 further includes at least one sensor 205, such as an optical sensor, a motion sensor, and another sensor. Specifically, the optical sensor includes an ambient light sensor and a proximity sensor. The ambient light sensor may adjust luminance of a display panel 2061 based on brightness of ambient light, and the proximity sensor may disable the display panel 2061 and/or backlight when the terminal device 200 approaches an ear. As a type of the motion sensor, an accelerometer sensor may detect magnitude of an acceleration in each direction (generally three axes), and may detect magnitude and a direction of gravity when being static. The accelerometer sensor may be used for recognizing a terminal device gesture (for example, horizontal and vertical screen switching, a related game, or magnetometer posture calibration), a function related to vibration recognition (for example, a pedometer or a strike), or the like. The sensor 205 may further include a fingerprint sensor, a pressure sensor, an iris sensor, a molecular sensor, a gyroscope, a barometer, a hygrometer, a thermometer, an infrared sensor, and the like. This is not described herein.

The display unit 206 is configured to display information entered by the user or information provided for the user. The display unit 206 may include a display panel 2061, and the display panel 2061 may be configured in a form of a liquid crystal display (Liquid Crystal Display, LCD), an organic light-emitting diode (Organic Light-Emitting Diode, OLED), or the like.

The user input unit 207 may be configured to receive input digit or character information and generate key signal input related to user setting and function control of the terminal device. Specifically, the user input unit 207 includes a touch panel 2071 and another input device 2072. The touch panel 2071, also referred to as a touchscreen, may collect a touch operation performed by the user on or near the touch panel 2071 (for example, an operation performed by the user on or near the touch panel 2071 by using any suitable object or accessory such as a finger or a stylus). The touch panel 2071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 210, and can receive and execute a command sent by the processor 210. In addition, the touch panel 2071 may be implemented by using multiple types such as a resistive type, a capacitive type, an infrared ray, and a surface acoustic wave. The user input unit 207 may include another input device 2072 in addition to the touch panel 2071. Specifically, the another input device 2072 may include but is not limited to one or more of a physical keyboard, a function key (such as a volume control key or an on/off key), a trackball, a mouse, a joystick, and the like. Details are not described herein.

Further, the touch panel 2071 may cover the display panel 2061. After detecting the touch operation on or near the touch panel 2071, the touch panel 2061 transmits the touch operation to the processor 210 to determine a type of a touch event, and then the processor 210 provides corresponding visual output on the display panel 2061 based on the type of the touch event. In FIG. 14, the touch panel 2071 and the display panel 2061 are used as two independent components to implement input and output functions of the terminal device. However, in some embodiments, the touch panel 2071 and the display panel 2061 may be integrated to implement the input and output functions of the terminal device. This is not specifically limited herein.

The interface unit 208 is an interface connecting an external apparatus to the terminal device 200. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 208 may be configured to receive input (for example, data information and power) from the external apparatus and transmit the received input to one or more elements in the terminal device 200, or may be configured to transmit data between the terminal device 200 and the external apparatus.

The memory 209 may be configured to store a software program and various data. The memory 209 may mainly include a program storage area and a data storage area. The program storage area may store an operating system, an application required by at least one function (such as a sound play function or an image play function), and the like. The data storage area may store data (such as audio data or an address book) or the like created based on use of the mobile phone. In addition, the memory 209 may include a high-speed random access memory, and may further include a non-volatile memory such as at least one magnetic disk storage component, a flash memory component, or another volatile solid-state storage component.

The processor 210 is a control center of the terminal device, and is connected to all parts of the entire terminal device by using various interfaces and lines, and performs various functions of the terminal device and processes data by running or executing the software program and/or the module that are stored in the memory 209 and invoking the data stored in the memory 209, to implement overall monitoring on the terminal device. The processor 210 may include one or more processing units. Optionally, the processor 210 may be integrated with an application processor and a modem processor. The application processor mainly processes an operating system, a user interface, an application, and the like, and the modem processor mainly processes wireless communication. It may be understood that the modem processor may alternatively not be integrated into the processor 210.

The terminal device 200 may further include the power supply 211 (such as a battery) that supplies power to each component. Optionally, the power supply 211 may be logically connected to the processor 210 by using a power management system, to implement functions such as charging, discharging, and power consumption management by using the power management system.

In addition, the terminal device 200 includes some function modules not shown, and details are not described herein.

Optionally, an embodiment of the present disclosure further provides a terminal device, including, as shown in FIG. 14, a processor 210, a memory 209, and a computer program that is stored in the memory 209 and may run on the processor 210. When the computer program is executed by the processor 210, processes of the foregoing method embodiments can be implemented, and a same technical effect can be achieved. To avoid repetition, details are not described herein.

An embodiment of the present disclosure further provides a computer-readable storage medium. A computer program is stored in the computer-readable storage medium. When being executed by a processor, processes of the foregoing method embodiments can be implemented, and a same technical effect can be achieved. To avoid repetition, details are not described herein. The computer-readable storage medium includes a read-only memory (Read-Only Memory, ROM), a random access memory (Random Access Memory, RAM), a magnetic disk, an optical disc, or the like.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another same element in a process, method, article, or apparatus that includes the element.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of the present disclosure essentially or the part contributing to related technologies may be implemented in a form of a software product. The computer software product is stored in a storage medium (such as a ROM/RAM, a magnetic disk, or an optical disc) and includes several instructions for instructing a terminal device (which may be a mobile phone, a computer, a server, an air conditioner, or a network device) to execute the methods described in the embodiments of the present disclosure.

The embodiments of the present disclosure are described with reference to the accompanying drawings above. However, the present disclosure is not limited to the foregoing specific implementations. The foregoing specific implementations are merely exemplary, but are not limiting. A person of ordinary skill in the art may make many forms without departing from the objective and the scope of the claims of the present disclosure.

## Claims

1. A display control method, comprising:
obtaining a target screenshot with no operation record;
obtaining image data and application data of the target screenshot and historical screenshot data associated with a data type to which the image data and the application data belong, wherein the application data is used to indicate an application for obtaining the target screenshot; and
displaying prompt information in a case that it is determined, based on the historical screenshot data, that the target screenshot meets a preset condition; wherein
the prompt information is used to indicate that there is a screenshot with no operation record in a terminal device.

2. The method according to claim 1, wherein the historical screenshot data comprises at least one image control operation on a historical screenshot of the data type, and the prompt information is specifically used to prompt the user to perform the at least one image control operation on the target screenshot; and
the data type comprises: a type of the application for obtaining the target screenshot, a content type of the target screenshot, and a file type to which content of the target screenshot belongs.

3. The method according to claim 1 or 2, wherein the determining, based on the historical screenshot data, that the target screenshot meets a preset condition comprises:
obtaining a quantity of first screenshots based on the historical screenshot data, and in a case that the quantity of first screenshots is greater than or equal to a preset quantity, determining that the target screenshot meets the preset condition; or
obtaining a weight value corresponding to a first screenshot based on the historical screenshot data, and in a case that the weight value corresponding to the first screenshot is greater than or equal to a preset weight value, determining that the target screenshot meets the preset condition; wherein
the first screenshot is any one of the following: a screenshot that is obtained from a same application as the target screenshot and that has an operation record, a screenshot that comprises same content as the target screenshot and that has an operation record, and a screenshot whose file type is same as the file type to which the content of the target screenshot belongs and that has an operation record.

4. The method according to claim 3, wherein the obtaining a weight value corresponding to a first screenshot comprises:
obtaining a control operation type of each screenshot in the first screenshot;
determining, based on the control operation type of each screenshot, a weight value corresponding to each screenshot, wherein one control operation type corresponds to one weight value; and
calculating a sum of the weight values corresponding to the screenshots to obtain the weight value corresponding to the first screenshot.

5. The method according to claim 1, wherein before the obtaining a target screenshot with no operation record, the method further comprises:
obtaining i-th screenshot; and
detecting, based on a preset period, whether the i-th screenshot has an operation record, and in a case that the i-th screenshot has no operation record in each detection, determining that the i-th screenshot is the target screenshot with no operation record; wherein
i is a positive integer.

6. The method according to claim 1, wherein the displaying prompt information comprises:
displaying a target identifier in a case that an interface of the terminal device is an interface of a target application, wherein the target identifier is used to indicate that there is an image on which no operation is performed in screenshots obtained from the target application; or
displaying at least one prompt item in a case that an interface of the terminal device is a desktop interface, wherein each prompt item is used to indicate that there is an image on which no operation is performed in screenshots obtained from an application, and different prompt items indicate different applications.

7. The method according to claim 1 or 6, wherein the method further comprises:
in a case that the number of times of displaying the prompt information reaches a preset number of times, adjusting a value of a target time interval from a first value to a second value, and reducing a weight value corresponding to a control operation type of the target screenshot; wherein
the target time interval is a time interval between two consecutive times of displaying the prompt information, and the second value is greater than the first value.

8. The method according to claim 1, wherein after the displaying prompt information, the method further comprises:
receiving a first input of a user; and
displaying at least one screenshot in response to the first input, wherein each screenshot in the at least one screenshot comprises one first identifier and one second identifier; wherein
the first identifier is used to indicate one first-type application, the second identifier is used to indicate one second-type application, the first-type application is an application for obtaining a screenshot, and the second-type application is an application associated with an operation on a screenshot.

9. The method according to claim 8, wherein the displaying at least one screenshot comprises:
separately displaying one first identifier, one second identifier, and at least one first screenshot in each sub-area of N sub-areas of a display area of a display screen; wherein
the at least one first screenshot is an image obtained from an application indicated by the first identifier and operated in an application indicated by the second identifier, one sub-area corresponds to at least one first screenshot associated with one first identifier and one second identifier, and N is a positive integer.

10. The method according to claim 1, wherein after the displaying prompt information, the method further comprises:
receiving a second input of a user; and
in response to the second input, separately displaying, in each sub-area of M sub-areas of a display area of a display screen, one first identifier and at least one screenshot associated with the first identifier; wherein
the first identifier is used to indicate one first-type application, the first-type application is an application for obtaining the at least one screenshot, and M is a positive integer.

11. The method according to claim 10, wherein after the separately displaying one first identifier and at least one screenshot associated with the first identifier, the method further comprises:
receiving an input of the user for one first identifier; and
displaying, in response to the input for one first identifier, all screenshots associated with the first identifier.

12. The method according to claim 1, wherein after the displaying prompt information, the method further comprises:
receiving a third input of a user; and
in response to the third input, separately displaying, in each sub-area of T sub-areas of a display area of a display screen, one second identifier and at least one screenshot associated with the second identifier; wherein
the second identifier is used to indicate one second-type application, the second-type application is an application associated with an operation on the at least one screenshot, and T is a positive integer.

13. The method according to claim 12, wherein after the separately displaying one second identifier and at least one screenshot associated with the second identifier, the method further comprises:
receiving an input of the user for one second identifier; and
displaying, in response to the input for one second identifier, all screenshots associated with the second identifier.

14. A terminal device, wherein the terminal device comprises an obtaining module, a determining module, and a display module;
the obtaining module is configured to: obtain a target screenshot with no operation record, and obtain image data and application data of the target screenshot and historical screenshot data associated with a data type to which the image data and the application data belong, wherein the application data is used to indicate an application for obtaining the target screenshot; and
the display module is configured to display prompt information in a case that the determining module determines, based on the historical screenshot data, that the target screenshot meets a preset condition; wherein
the prompt information is used to indicate that there is a screenshot with no operation record in the terminal device.

15. A terminal device, comprising: a memory, a processor, and a computer program that is stored in the memory and executable on the processor, wherein when the computer program is executed by the processor, steps in the display control method according to any one of claims 1 to 13 are implemented.

16. A computer-readable storage medium, wherein the computer-readable storage medium stores a computer program, and when the computer program is executed by a processor, steps of the display control method according to any one of claims 1 to 13 are implemented.
